# EUROPEAN PATENT SPECIFICATION

(11) **EP 1 173 985 B1**
(45) Date of publication and mention of the grant of the patent: **13.08.2008**
(21) Application number: 00928013.2
(22) Date of filing: 28.03.2000
(51) Int. Cl.: H04Q 7/22

(54) **SYSTEM AND METHOD FOR REDUCING CHANNEL REASSIGNMENT DELAYS**
SYSTEM UND VERFAHREN ZUR VERRINGERUNG VON VERZÖGERUNGEN BEI WIEDERZUTEILUNG VON KANÄLE
SYSTEME ET PROCEDE POUR REDUIRE LE TEMPS DE REASSIGNATION D'UN CANAL

(30) Priority: 23.04.1999 US 296587
(43) Date of publication of application: 23.01.2002
(73) Proprietor: TELEFONAKTIEBOLAGET LM ERICSSON (publ), 164 83 Stockholm (SE)
(72) Inventor: RAITH, Krister, Durham, NC 27713 (US); LINDSKOG, Jan, S-435 43 Pixbo (SE); DIACHINA, John, Garner, NC 27529 (US); RYDNELL, Gunnar, S-430 65 Rävlanda (SE)
(74) Representative: Kühn, Friedrich Heinrich
(86) International application number: PCT/SE2000/000602
(87) International publication number: WO 2000/065853

(56) References cited:
- US-A- 5 790 551

## Description

### BACKGROUND

The present invention relates generally to radiocommunication systems and, more particularly, to a system and method for decreasing channel reassignment delays during those instances where synchronous channels exist.

Historically, cellular radiocommunication systems were designed to provide support for voice connections between mobile users and the system. More recently, particularly with the advent of the Internet, there is a greater desire on the part of wireless subscribers to transmit and receive packet data.

New standards are currently being settled for integrated voice and packet data services in ANSI-136 systems. A forthcoming version of the standard will provide the ability to create an effective radio resource utilization for both the voice and packet data services supplied by ANSI-136 compliant systems. One such attempt to provide an effective radio resource for voice and packet data services is described in U.S. Patent No. 5,790,551 to Chan. A dynamic channel assignment technique is disclosed therein where the network provides to a mobile user, in response to a request from the mobile for assignment of a channel on which to transmit data, a particular channel and particular time slots on which the mobile may transmit. In the system described in the Chan patent, no channels are specifically dedicated to data transmissions; rather, the network determines a channel that is free for a specific time period and assigns it to a specific mobile for data transmission. This document does not, however, disclose a method for reassigning a mobile station which considers whether or not the old channel (i.e, the channel from which the mobile station was transferred) and the new channel (i.e. the channel to which the mobile station is transferred) are synchronous.

The new ANSI-136 standards will likely support two types of channels for packet data transmissions: a packet control channel (PCCH) and a packet traffic channel (PTCH). The PCCH may be either a point-to-point or a point-to-multipoint channel. It is this channel on which a mobile station camps (i.e., where the mobile reads broadcast and paging information and where the mobile has random access opportunities or reserved access opportunities). The PTCH, on the other hand, is a point-to-point, reserved access only, channel. As will be appreciated by those skilled in the art, a physical channel can provide either packet data services or voice services or can simultaneously provide both packet data and voice services. Neither broadcast nor paging capabilities are included in the PTCH concept.

A transaction on the above-identified channels starts with the transmission of a Begin frame followed by consecutive Continue frames. A transaction may be classified as "unbounded", meaning that the total length of the transaction is not predetermined (i.e., additional data can be added to extend the length of the existing transaction) or "bounded" where there is a definite end to the transaction. As one skilled in the art will appreciate, the shortest bounded transaction would include a single Begin frame. Unbounded transactions occur when the amount of data to be sent exceeds a configurable limit. If below the configurable limit, an end indication is sent explicitly in the Begin frame.

In addition to Begin and Continue frames, administrative packet data units (PDUs) called "Automatic Repeat reQuest Status frames" or "ARQ Status frames" can be sent arbitrarily or according to a specified schedule. An ARQ Status frame can be sent in the first frame, when no current transaction exists, or embedded in a transaction. The ARQ Status frame is used to convey messages, such as peer data reception status (i.e., the ARQ table) and for sending reassignment messages, sometimes referred to as "assignment" messages. As one skilled in the art will appreciate, reassignment messages may also be sent in Begin frames.

Upon activation, a mobile station selects a PCCH on which to camp. If multiple PCCHs exist in a cell, then the mobile station selects one depending, for example, on the mobile station's identification. For instance, if the least significant bits of the mobile station's identification are 00, the mobile station will choose one PCCH; if the least significant bits are 01, it will choose another PCCH, etc. By selecting a PCCH in the above-described manner, paging traffic is spread out over the available PCCHs.

One skilled in the art will appreciate that certain situations may arise in which a mobile station, that is camped on a PCCH, may be requested to tune to another channel. For example, upon a contention-based access from the mobile station or upon receiving mobile termination data from the network, the network may direct the mobile station to transfer (i.e., tune) to a specific PTCH for its packet transmission. Channel Reassignment messages are generally used for ordering a mobile station to make such a transfer. A reassignment message includes, for example, information about the new PCCH/PTCH channel and/or whether a mobile station can continue the existing transaction.

The forthcoming version of the ANSI-136 standard will support Channel Reassignment messages for spreading the traffic load over the available channels in a cell as well as to redirect GPRS Enhanced Data rates for GSM Evolution (EDGE) capable mobile stations if supported in the cell. The EDGE specifications have been developed to offer packet data communications at high speeds within current frequency bands and is based on the current GSM Time Division Multiple Access (TDMA) frame structure. EDGE channels, including traffic and control channels, use a radio interface based on a 200 kHz carrier bandwidth.

It will be appreciated by one skilled in the art that situations occur, when offloading mobiles to, for example, an EDGE channel, where a Channel Reassignment message will force a mobile station to terminate the current MAC session on one channel and restart a new MAC session on another channel. Moreover, Channel Reassignment messages may also offload a mobile station from one PCCH to another PCCH, from a PCCH to a PTCH or from a PTCH to another PTCH.

When a mobile station is reassigned to a new channel, the mobile station tunes to the new channel as part of the reassignment procedure. A typical channel tuning (or re-tuning) operation involves three separate procedures: a frequency tuning procedure for adjusting to the frequency of the new channel, a bit synchronization procedure for adjusting a sampling occasion to be bit synchronous with the new channel and a frame adjustment procedure for adjusting the mobile station to the frame start position of the new channel. Each of these procedures is well known as is the means for implementing them.

The current IS 136 Packet Data MAC Specification, which is incorporated by reference herein, does not, in those situations where Channel Reassignment messages are sent, notify the mobile station as to whether or not the new channel is synchronous with the old channel. Synchronous channels typically exist when the old channel and new channel are located within the same base station. Similarly, non-synchronous channels may exist when a mobile station is transferred from a first channel supported by a first base station to a second channel supported by a second base station.

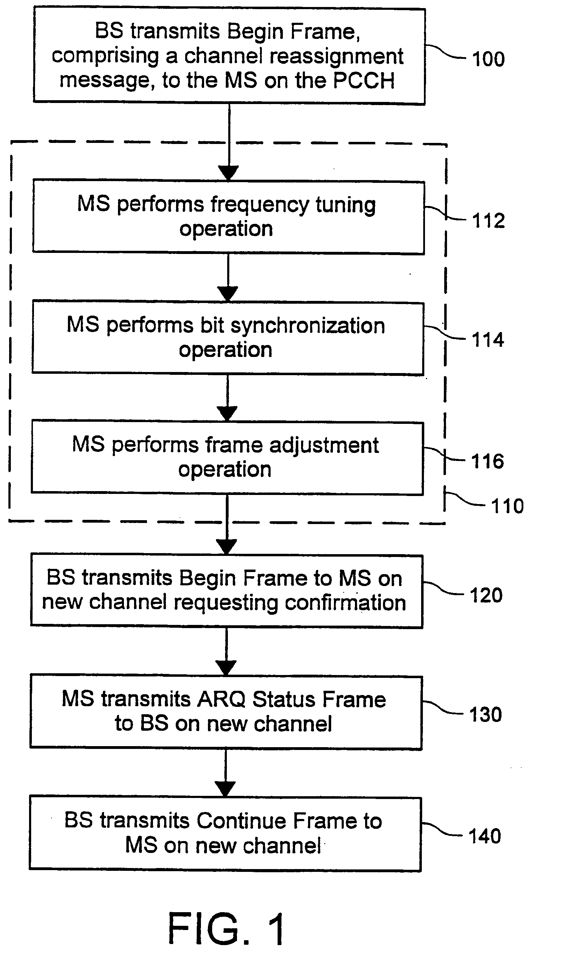

Figure 1 illustrates the conventional channel reassignment procedure under the IS 136 Packet Data MAC Specification for a mobile terminated data transaction. In step 100, the base station transmits a first Begin frame, which includes a Channel Reassignment message, to the mobile station, which is tuned to, for example, a PCCH, in order to instruct the mobile station to tune to a new channel (e.g., a PTCH). In response, the mobile station tunes to the new channel (step 110). As set forth above, in order for the mobile station to tune to the new channel, the mobile station performs a frequency tuning procedure (step 112), a bit synchronization procedure (step 114) and a frame adjustment procedure (step 116). According to the conventional technique, the mobile station performs each of these three procedures even in those instances where synchronous channels already exist. Once tuned to the new channel, the base station may transmit a second Begin frame or a Continue frame on the new channel, that includes user data and optionally a poll bit that is set to request the mobile station to confirm receipt of the transmission, to the mobile station on the new channel (step 120). The mobile station, in response to receipt of the transmitted frame, transmits an ARQ Status frame that confirms the mobile station's presence on the new channel (step 130). The base station may then send one or more Continue frames containing additional user data to the mobile station over the new channel (step 140).

One skilled in the art will appreciate that, in those instances where the new channel (i.e., the channel to which the mobile station is transferred) is synchronous with the old channel (i.e., the channel from which the mobile station is transferred), it is unnecessary for the mobile station to synchronize to the new channel (i.e., it is unnecessary for the mobile station to perform the above-described bit synchronization and frame adjustment procedures) since in those instances, the mobile station is already bit synchronized to the new channel and adjusted to the frame start position of the new channel. Performance of these procedures in such instances needlessly delays the time in which the mobile station is ready to transmit/receive data on the new channel.

Therefore, there exists a need for a system and method for notifying a mobile station, during a channel reassignment procedure, of the existence of synchronous channels so as to reduce the mobile station's delay in tuning to the new channel.

### SUMMARY

The present invention seeks to overcome the above-identified deficiencies in the art by providing a system and method for decreasing the time for reassigning a mobile station from a first channel to a second channel in those instances where synchronous channels exist. According to exemplary embodiments of the present invention, a base station transmits in a channel reassignment message to a mobile station channel synchronization information that notifies the mobile station whether or not the new channel to which the mobile station is to tune is synchronous with the old channel from which the mobile station is transferred. By notifying a mobile station of this synchronization information in the channel reassignment message, the mobile station can bypass the performance of the bit synchronization and frame adjustment procedures when tuning to the new channel. As a result, the time in which the mobile station can tune to the new channel is reduced.

### BRIEF DESCRIPTION OF THE DRAWINGS

The above objects and features of the present invention will be more apparent from the following description of the preferred embodiments with reference to the accompanying drawings, wherein:
Figure 1 illustrates a conventional channel reassignment procedure under the IS 136 Packet Data MAC Specification for a mobile terminated data transaction;
Figure 2 is a block diagram of an exemplary cellular mobile radiotelephone system, including an exemplary base station and mobile station;
Figure 3 illustrates the channel reassignment procedure, according to exemplary embodiments of the present invention, as implemented in an exemplary mobile terminated data transaction; and
Figure 4 illustrates the channel reassignment procedure, according to exemplary embodiments of the present invention, as implemented in an exemplary mobile originated data transaction.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention.

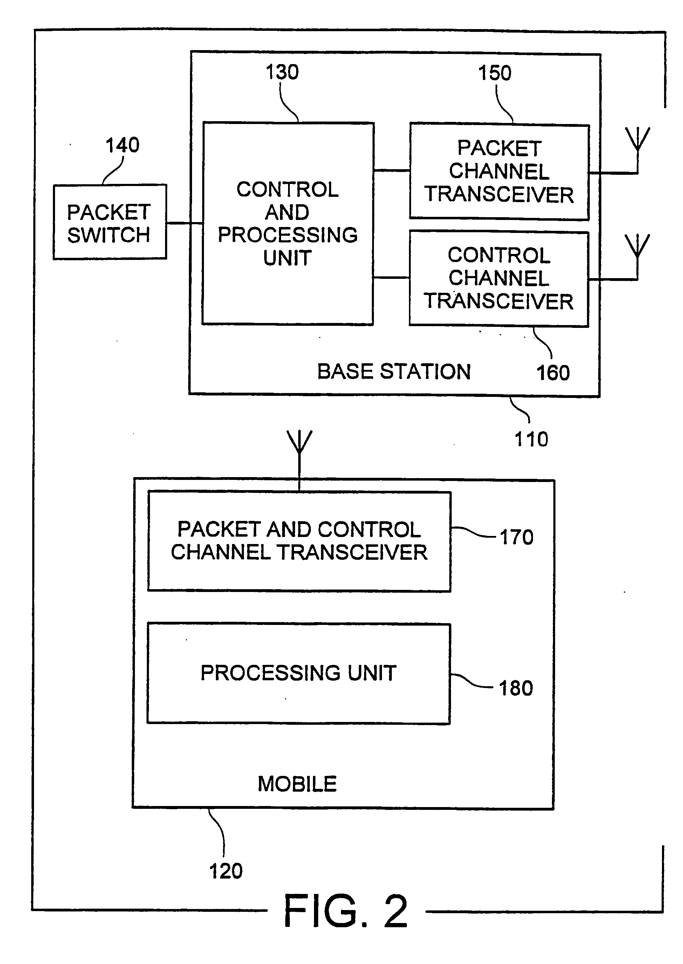

Figure 2 illustrates an exemplary cellular mobile radiotelephone system, including an exemplary base station 110 and mobile station 120. The exemplary base station includes a control and processing unit 130 which is connected to a packet switch 140 that in turn is connected to, for example, the Internet and/or an intranet (not shown). General aspects of such cellular radiotelephone systems are known in the art, as described by U.S. Patent No. 5,175,867 to Wejke et al., entitled "Neighbor-Assisted Handoff in a Cellular Communication System," and U.S. Patent Application No. 07/967,027 entitled "Multi-mode Signal Processing," which was filed on October 27, 1992.

The exemplary base station 110 handles one or more packet traffic channels through a packet channel transceiver 150 that is controlled by the control and processing unit 130. Also, each base station includes a control channel transceiver 160 that may be capable of handling more than one packet control channel. The control channel transceiver 160 is controlled by the control and processing unit 130. The control channel transceiver 160 broadcasts control information over the control channel of the base station or cell to mobiles locked to that control channel. It will be understood that the transceivers 150 and 160 can be implemented as a single device, like the packet and control transceiver 170, for use with Digital Control Channels (DCCHs) and Digital Traffic Channels (DTCs) that share the same radio carrier frequency. It will be further appreciated that the base station 110 would also include one or more transceivers for handling voice communications.

The mobile station 120 receives packet data and broadcast and paging information at its packet and control channel transceiver 170. The mobile station may additionally include one or more separate transceivers (not shown) for handling voice communications. One skilled in the art will appreciate that the voice transceiver and the packet data transceiver could, in the alternative, be implemented as a single unit. The processing unit 180 controls the transceiver 170 and evaluates/processes the received information.

As indicated above with respect to Figure 1, the current IS 136 Packet Data MAC Specification does not notify a mobile station during a channel reassignment procedure whether the new channel (i.e., the channel to which the mobile station is transferred) is synchronous with the old channel (i.e., the channel from which the mobile station is transferred). According to conventional techniques, mobile stations automatically perform bit synchronization and frame adjustment operations when reassigned to a new channel, even in those situations where synchronous channels exist. As such, when synchronous channels do exist, the bit synchronization and frame adjustment operations are needlessly performed thereby delaying communications on the new channel.

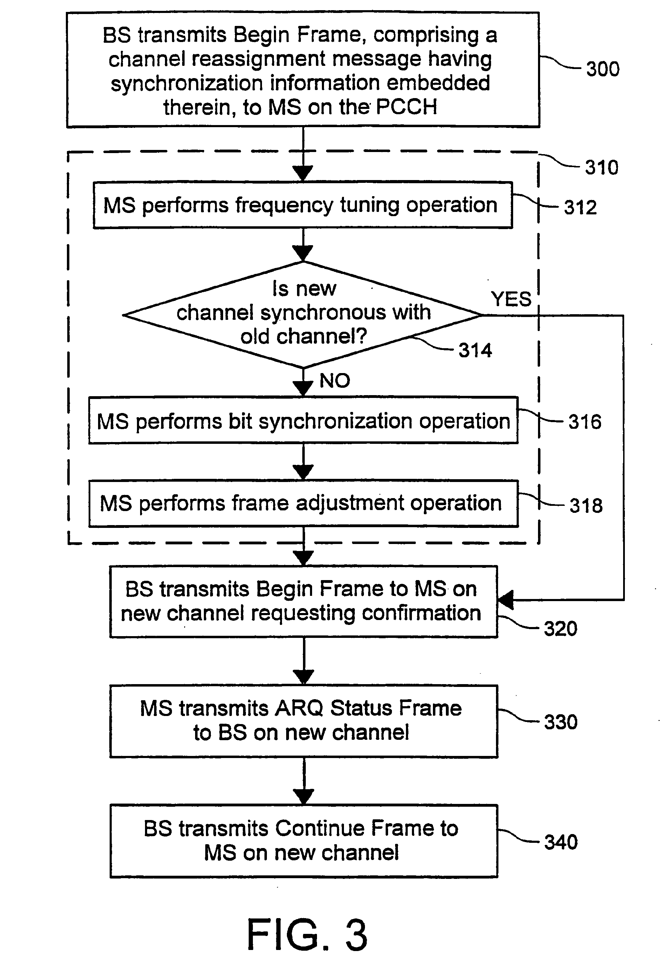

In order to avoid the above-described delays, the present invention provides a system and method for notifying a mobile station, in a Channel Reassignment message, of whether or not the old channel and new channel are synchronous. Figure 3 illustrates the channel reassignment procedure, according to exemplary embodiments of the present invention, as implemented in an exemplary mobile terminated data transaction. In step 300 of Figure 3, the base station transmits a first Begin frame that includes a Channel Reassignment message to the mobile station, which is tuned, for example, to a PCCH, in order to instruct the mobile station to tune to a new channel (e.g., a PTCH). According to exemplary embodiments of the present invention, the Channel Reassignment message includes synchronization information that notifies the mobile station as to whether or not the new channel is synchronous with the old channel (i.e., the PCCH). One skilled in the art will appreciate that the synchronization information may be multiple bits that provide such information as the phase difference between the old channel and the new channel or may be implemented as a single bit, indicating whether the old channel and new channel are "synchronous" or "not synchronous".

In response to the Channel Reassignment message, the mobile station tunes to the new channel (step 310). In tuning to the new channel, the mobile station tunes to the frequency of the new channel (step 312). The mobile station then determines, based on the synchronization information, whether or not the new channel is synchronous with the old channel (step 314). In those situations where the synchronization information indicates that new channel is not synchronous with the old channel, then the mobile station performs the bit synchronization and frame adjustment operations (steps 316 and 318). However, in those situations where the synchronization information indicates that new channel is synchronous with the old channel, then the mobile station bypasses the bit synchronization and frame adjustment operations. One skilled in the art will appreciate that it typically takes a mobile station approximately 100 ms to perform the bit synchronization and frame adjustment procedures. As such, by bypassing these operations, the time in which the mobile station can tune to the new channel is reduced.

In step 320, the base station transmits a second Begin frame (or a Continue frame), that includes user data and may include a set poll bit, to the mobile station on the new channel (e.g., the PTCH). The mobile station, in response to the receipt of the second Begin frame, transmits an ARQ Status frame if the poll bit was set that confirms the mobile station's presence on the new channel (step 330). The base station then sends additional user data in Continue frames to the mobile station over the new channel (step 340).

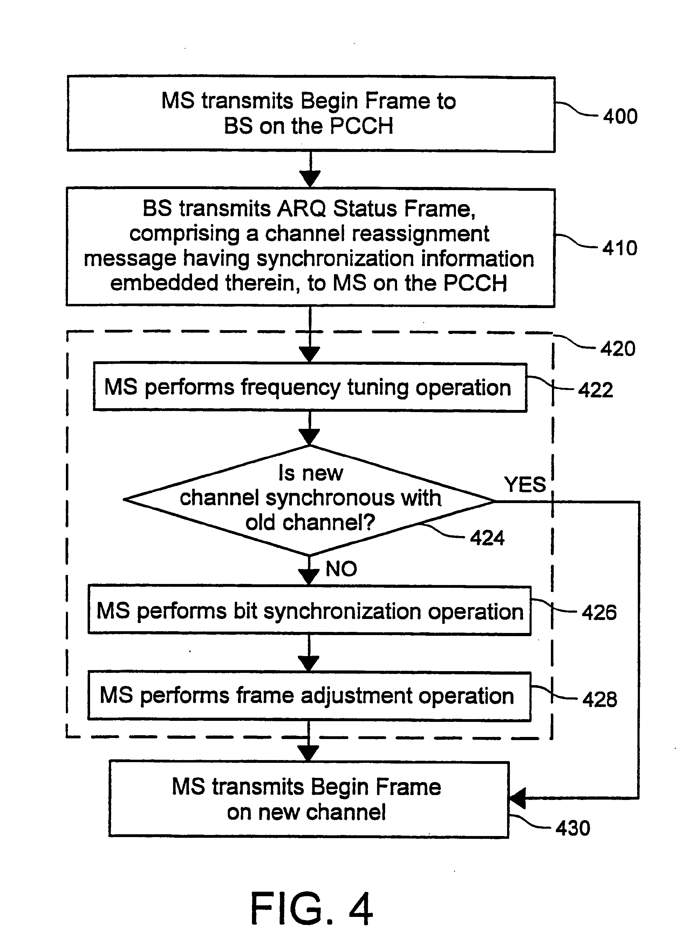

One skilled in the art will appreciate that the above-described reassignment procedure applies equally well to a mobile originated data transaction. Figure 4 illustrates the channel reassignment procedure, according to exemplary embodiments of the present invention, as implemented in an exemplary mobile originated data transaction. In Figure 4, the mobile station transmits on the PCCH a first Begin frame with user data to the base station to request a channel reservation (step 400). In step 410, the base station transmits an ARQ Status frame, that includes a Channel Reassignment message, to the mobile station indicating that the mobile station is to tune to a new channel (for this example, the PTCH). According to the present invention, the Channel Reassignment message includes synchronization information indicating whether or not the new channel is synchronous with the old channel.

In response to the Channel Reassignment message, the mobile station tunes to the new channel (step 420). In tuning to the new channel, the mobile station tunes to the frequency of the new channel (step 422). The mobile station then determines, based on the synchronization information, whether or not the new channel is synchronous with the old channel (step 424). In those situations where the synchronization information indicates that new channel is not synchronous with the old channel, the mobile station performs the bit synchronization and frame adjustment operations (steps 426 and 428). However, in those situations where the synchronization information indicates that new channel is synchronous with the old channel, the mobile station bypasses the bit synchronization and frame adjustment operations. The mobile station thereafter transmits a second Begin frame on the new channel (step 440).

As is evident from the above-described embodiments, the reassignment procedure of the present invention utilizes synchronization information, embedded in a reassignment message in a downlink PDU to notify a mobile station of the synchronous or non-synchronous state of the channel to which the mobile station is transferred. One skilled in the art will appreciate that the specific type of PDU that is employed is not critical and that many types of PDU may be employed.

By implementing the reassignment procedure of the present invention, the mobile station has the ability to avoid the performance of the bit synchronization and frame adjustment operations that are part of the procedure by which a mobile station tunes to the new channel in those situations where the channel to which the mobile station is transferred is synchronous with the channel from which the mobile station is transferred. As a result, the time it takes a mobile station to tune to and begin communicating on a new channel is reduced.

In addition to decreasing the delay in reassigning a mobile station from one channel to another, the supply of synchronization information according to the present invention also benefits base station operations. For example, it will be appreciated that Channel Reassignment messages are typically used for evening out the load over all available channels in a cell. The current volume of transactions on a channel is one factor that is considered in deciding when to transmit a Channel Reassignment message. The larger the volume, the larger the effect of the channel reassignment for the current channel from which the channel reassignment was sent. "Unbounded" transactions, which have transaction lengths that are not predetermined (i.e., additional data may be added to extend the length of an existing transaction), are therefore desirable candidates for the channel reassignment procedure.

Base station operators typically set the threshold for classifying the length of a transaction as "bounded" or "unbounded." When the base station operator sets the bounded/unbounded threshold too high, a large number of transactions will be bounded. Setting the threshold too low, on the other hand, results in a large number of transactions being unbounded and makes it difficult to differentiate whether a mobile station's volume is just above the configurable limit or much more than the configurable limit.

As set forth above, when the new channel (i.e., the channel to which the mobile station is transferred) is synchronous with the old channel (i.e., the channel from which the mobile station is transferred), some time can be saved in re-tuning the mobile station. For every 20 ms that is saved, typically a gain of 20-30 bytes per time slot can be achieved. As one skilled in the art will appreciate the gain depends on the type of modulation employed and whether the mobile station is capable of utilizing one, two or all three time slots. By providing the base station with the above-described synchronization information, the base station operator can lower the bounded/unbounded threshold by the amount of the gain achieved as a result of reducing the time needed for re-tuning a mobile station and utilize the unbounded transactions as candidates for channel reassignment messages in order to even out the load in the cell.

The foregoing has described the principles, preferred embodiments and modes of operation of the present invention. However, the invention should not be construed as being limited to the particular embodiments discussed above. For example, one skilled in the art will appreciate that the present invention is equally applicable to other types of systems, such as hybrid code division multiple access (CDMA) systems. Thus, the above-described embodiments should be regarded as illustrative rather than restrictive, and it should be appreciated that variations may be made in those embodiments by workers skilled in the art without departing from the scope of the present invention as defined by the following claims.

## Claims

1. A method for communicating packet data between a base station (110) and a mobile station (120), said method comprising the steps of:
transmitting (300), on a first channel, a reassignment message indicating that said mobile station is to tune to a second channel, said reassignment message comprising synchronization information;
tuning (312) to said second channel;
determining (314), based on said synchronization information, whether or not the second channel is synchronous with the first channel;
selectively synchronizing (316, 318) to said second channel based on said synchronization information: and
transmitting packet data on said second channel.

2. The method of claim 1 wherein said synchronizing step comprises the steps of:
performing a bit synchronization operation (316): and
performing a frame adjustment operation (318).

3. The method of claim 1 wherein said step of transmitting (300) said reassignment message occurs in response to a request by said mobile station for a mobile-originated packet data transaction.

4. The method of claim 1 wherein said step of transmitting (301) said reassignment message occurs in response to a step of initiating a mobile terminated data transaction by said base station.

5. The method of claim 1 wherein said first channel is a packet control channel and said second channel is a packet traffic channel.

6. The method of claim 1 wherein said first and second channels are packet control channels.

7. The method of claim 1 wherein said synchronization information is a single bit.

8. The method of claim 7 wherein said single bit is set when the first and second channels are synchronized.

9. The method of claim 1 wherein said step of tuning to said second channel comprises the step of tuning to a frequency of said second channel.

10. A mobile station (120) comprising:
means for receiving, on a first channel, a reassignment message indicating that said mobile station (120) is to tune to a second channel; said reassignment message comprising synchronization information;
means for tuning to said second channel;
means for determining, based on said synchronization information, whether or not the second channel is synchronous with the first channel;
means for selectively performing a synchronization operation based on said synchronization information: and
means for transmitting packet data on said second channel.

11. The mobile station (120) of claim 10 wherein said means for performing comprises:
means for performing a bit synchronization operation: and
means for performing a frame adjustment operation.

12. The mobile station (120) of claim 10 wherein said means for receiving said reassignment message receives said reassignment message in response to a request by said mobile station (120) for a mobile-originated packet data transaction.

13. The mobile station (120) of claim 10 wherein said means for receiving said reassignment message receives said reassignment message during a mobile terminated data transaction.

14. The mobile station (120) of claim 10 wherein said first channel is a packet control channel and said second channel is a packet traffic channel.

15. The mobile station (120) of claim 10 wherein said first and second channels are packet control channels.

16. The mobile station (120) of claim 10 wherein said synchronization information is a single bit.

17. The mobile station (120) of claim 16 wherein said single bit is set when the first and second channels are synchronized.

18. The mobile station (120) of claim 10 wherein said means for tuning to said second channel comprises means for tuning to a frequency of said second channel.

19. A system comprising:
a base station (110) for transmitting in a downlink a reassignment message on a first channel, said reassignment message comprising synchronization information; and
a mobile station (120) for receiving said reassignment message, tuning to a second channel in response thereto, performing a synchronization operation when said synchronization information indicates that said first and second channels are non-synchronous and bypassing the synchronization operation when said synchronization information indicates that said first and second channels are synchronous.

20. The system of claim 19 wherein said synchronization operation comprises a bit synchronization operation and a frame adjustment operation.

21. The system of claim 19 wherein said first channel is a packet control channel.

22. The system of claim 19 wherein said synchronization information is a single bit.

23. The system of claim 19 wherein said synchronization information allows for a threshold for classifying bounded and unbounded transactions to be lowered.

## Patentansprüche

1. Verfahren zur Übermittlung von Paketdaten zwischen einer Basisstation (110) und einer Mobilstation (120), wobei das Verfahren die folgenden Schritte umfaßt:
auf einem ersten Kanal erfolgendes Senden (300) einer Neuzuteilungsnachricht, die angibt, daß die Mobilstation auf einen zweiten Kanal abzustimmen ist, wobei die Neuzuteilungsnachricht Synchronisationsinformation umfaßt;
Abstimmen (312) auf den zweiten Kanal;
Bestimmen (314) auf der Grundlage der Synchronisationsinformation, ob der zweite Kanal mit dem ersten Kanal synchron ist oder nicht;
selektives Synchronisieren (316, 318) mit dem zweiten Kanal auf der Grundlage der Synchronisationsinformation; und
Senden von Paketdaten auf dem zweiten Kanal.

2. Verfahren nach Anspruch 1, wobei der Synchronisationsschritt die folgenden Schritte umfaßt:
Durchführen einer Bitsynchronisationsoperation (316); und
Durchführen einer Rahmenanpassungsoperation (318).

3. Verfahren nach Anspruch 1, wobei der Schritt des Sendens (300) der Neuzuteilungsnachricht als Antwort auf eine Anforderung einer mobil eingeleiteten Paketdatentransaktion durch die Mobilstation stattfindet.

4. Verfahren nach Anspruch 1, wobei der Schritt des Sendens (300) der Neuzuteilungsnachricht als Antwort auf einen Schritt zur Auslösung einer mobil abgeschlossenen Datentransaktion durch die Basisstation stattfindet.

5. Verfahren nach Anspruch 1, wobei der erste Kanal ein Paketsteuerungskanal ist und der zweite Kanal ein Paketverkehrskanal ist.

6. Verfahren nach Anspruch 1, wobei der erste und der zweite Kanal Paketsteuerungskanäle sind.

7. Verfahren nach Anspruch 1, wobei die Synchronisationsinformation ein einzelnes Bit ist.

8. Verfahren nach Anspruch 7, wobei das einzelne Bit gesetzt wird, wenn der erste und der zweite Kanal synchronisiert sind.

9. Verfahren nach Anspruch 1, wobei der Schritt des Abstimmens auf den zweiten Kanal den Schritt des Abstimmens auf eine Frequenz des zweiten Kanals umfaßt.

10. Mobilstation (120), umfassend:
ein Mittel zum auf einem ersten Kanal erfolgenden Empfangen einer Neuzuteilungsnachricht, die angibt, daß die Mobilstation (120) auf einen zweiten Kanal abzustimmen ist, wobei die Neuzuteilungsnachricht Synchronisationsinformation umfaßt;
ein Mittel zum Abstimmen auf den zweiten Kanal;
ein Mittel zum auf der Grundlage der Synchronisationsinformation erfolgenden Bestimmen, ob der zweite Kanal mit dem ersten Kanal synchron ist oder nicht;
ein Mittel zum selektiven Durchführen einer Synchronisationsoperation auf der Grundlage der Synchronisationsinformation; und
ein Mittel zum Senden von Paketdaten auf dem zweiten Kanal.

11. Mobilstation (120) nach Anspruch 10, wobei das Mittel zum Durchführen folgendes umfaßt:
ein Mittel zum Durchführen einer Bitsynchronisationsoperation; und
ein Mittel zum Durchführen einer Rahmenanpassungsoperation.

12. Mobilstation (120) nach Anspruch 10, wobei das Mittel zum Empfangen der Neuzuteilungsnachricht die Neuzuteilungsnachricht als Antwort auf eine Anforderung einer mobil eingeleiteten Paketdatentransaktion durch die Mobilstation (120) empfängt.

13. Mobilstation (120) nach Anspruch 10, wobei das Mittel zum Empfangen der Neuzuteilungsnachricht die Neuzuteilungsnachricht während einer mobil abgeschlossenen Datentransaktion empfängt.

14. Mobilstation (120) nach Anspruch 10, wobei der erste Kanal ein Paketsteuerungskanal ist und der zweite Kanal ein Paketverkehrskanal ist.

15. Mobilstation (120) nach Anspruch 10, wobei der erste und der zweite Kanal Paketsteuerungskanäle sind.

16. Mobilstation (120) nach Anspruch 10, wobei die Synchronisationsinformation ein einzelnes Bit ist.

17. Mobilstation (120) nach Anspruch 16, wobei das einzelne Bit gesetzt wird, wenn der erste und der zweite Kanal synchronisiert sind.

18. Mobilstation (120) nach Anspruch 10, wobei das Mittel zum Abstimmen auf den zweiten Kanal ein Mittel zum Abstimmen auf eine Frequenz des zweiten Kanals umfaßt.

19. System, umfassend:
eine Basisstation (110) zum Senden einer Neuzuteilungsnachricht auf einer Abwärtsstrecke auf einem ersten Kanal, wobei die Neuzuteilungsnachricht Synchronisationsinformation umfaßt; und
eine Mobilstation (120) zum Empfangen der Neuzuteilungsnachricht, Abstimmen auf einen zweiten Kanal als Antwort darauf, Durchführen einer Synchronisationsoperation, wenn die Synchronisationsinformation angibt, daß der erste und der zweite Kanal nicht synchron sind, und Umgehen der Synchronisationsoperation, wenn die Synchronisationsinformation angibt, daß der erste und der zweite Kanal synchron sind.

20. System nach Anspruch 19, wobei die Synchronisationsoperation eine Bitsynchronisationsoperation und eine Rahmenanpassungsoperation umfaßt.

21. System nach Anspruch 19, wobei der erste Kanal ein Paketsteuerungskanal ist.

22. System nach Anspruch 19, wobei die Synchronisationsinformation ein einzelnes Bit ist.

23. System nach Anspruch 19, wobei die Synchronisationsinformation eine Absenkung eines Schwellwerts zum Klassifizieren eingeschränkter und uneingeschränkter Transaktionen einbezieht.

## Revendications

1. Procédé pour communiquer des données par paquets entre une station de base (110) et une station mobile (120), ledit procédé comprenant les étapes de:
transmission (300), sur un premier canal, d'un message de réassignation indiquant que ladite station mobile doit s'accorder sur un second canal, ledit message de réassignation comprenant une information de synchronisation;
accord (312) sur ledit second canal;
détermination (314), sur la base de ladite information de synchronisation, de si oui ou non le second canal est synchrone avec le premier canal;
synchronisation sélective (316, 318) sur ledit second canal sur la base de ladite information de synchronisation; et
transmission de données par paquets sur ledit second canal.

2. Procédé selon la revendication 1, dans lequel ladite étape de synchronisation comprend les étapes de:
réalisation d'une opération de synchronisation de bits (316); et
réalisation d'une opération de réglage de trame (318).

3. Procédé selon la revendication 1, dans lequel ladite étape de transmission (300) dudit message de réassignation se produit en réponse à une requête de ladite station mobile quant à une transaction de données par paquets dont l'origine est un mobile.

4. Procédé selon la revendication 1, dans lequel ladite étape de transmission (300) dudit message de réassignation se produit en réponse à une étape d'initiation d'une transaction de données terminée par mobile par ladite station de base.

5. Procédé selon la revendication 1, dans lequel ledit premier canal est un canal de commande par paquets et ledit second canal est un canal de trafic par paquets.

6. Procédé selon la revendication 1, dans lequel lesdits premier et second canaux sont des canaux de commande par paquets.

7. Procédé selon la revendication 1, dans lequel ladite information de synchronisation est un unique bit.

8. Procédé selon la revendication 7, dans lequel ledit unique bit est établi lorsque les premier et second canaux sont synchronisés.

9. Procédé selon la revendication 1, dans lequel ladite étape d'accord sur ledit second canal comprend l'étape d'accord sur une fréquence dudit second canal.

10. Station mobile (120) comprenant:
un moyen pour recevoir, sur un premier canal, un message de réassignation indiquant que ladite station mobile (120) doit s'accorder sur un second canal; ledit message de réassignation comprenant une information de synchronisation;
un moyen pour un accord sur ledit second canal;
un moyen pour déterminer, sur la base de ladite information de synchronisation, si oui ou non le second canal est synchrone avec le premier canal;
un moyen pour réaliser sélectivement une opération de synchronisation sur la base de ladite information de synchronisation; et
un moyen pour transmettre des données par paquets sur ledit second canal.

11. Station mobile (120) selon la revendication 10, dans laquelle ledit moyen de réalisation comprend:
un moyen pour réaliser un opération de synchronisation de bits; et
un moyen pour réaliser une opération de réglage de trame.

12. Station mobile (120) selon la revendication 10, dans laquelle ledit moyen pour recevoir ledit message de réassignation reçoit ledit message de réassignation en réponse à une requête délivrée par ladite station mobile (120) quant à une transaction de données par paquets dont l'origine est un mobile.

13. Station mobile (120) selon la revendication 10, dans laquelle ledit moyen pour recevoir ledit message de réassignation reçoit ledit message de réassignation pendant une transaction de données terminée par mobile.

14. Station mobile (120) selon la revendication 10, dans laquelle ledit premier canal est un canal de commande par paquets et ledit second canal est un canal de trafic par paquets.

15. Station mobile (120) selon la revendication 10, dans laquelle lesdits premier et second canaux sont des canaux de commande par paquets.

16. Station mobile (120) selon la revendication 10, dans laquelle ladite information de synchronisation est un unique bit.

17. Station mobile (120) selon la revendication 16, dans laquelle ledit unique bit est établi lorsque les premier et second canaux sont synchronisés.

18. Station mobile (120) selon la revendication 10, dans laquelle ledit moyen d'accord sur ledit second canal comprend un moyen pour un accord sur une fréquence dudit second canal.

19. Système comprenant:
une station de base (110) pour transmettre dans une liaison descendante un message de réassignation sur un premier canal, ledit message de réassignation comprenant une information de synchronisation; et
une station mobile(120) pour recevoir ledit message de réassignation, accorder sur un second canal en réponse à celui-ci, réaliser une opération de synchronisation lorsque ladite information de synchronisation indique que lesdits premier et second canaux sont non synchrones et pour dériver l'opération de synchronisation lorsque ladite information de synchronisation indique que lesdits premier et second canaux sont synchrones.

20. Système selon la revendication 19, dans lequel ladite opération de synchronisation comprend une opération de synchronisation de bits et une opération de réglage de trame.

21. Système selon la revendication 19, dans lequel ledit premier canal est un canal de commande par paquets.

22. Système selon la revendication 19, dans lequel ladite information de synchronisation est un unique bit.

23. Système selon la revendication 19, dans lequel ladite information de synchronisation permet qu'un seuil pour classifier des transactions liées et non liées soit abaissé.
